# FASCICULE DE BREVET EUROPEEN

(11) **EP 3 310 655 B1**
(45) Date de publication et mention de la délivrance du brevet: **06.02.2019**
(21) Numéro de dépôt: 16729903.1
(22) Date de dépôt: 16.06.2016
(51) Int. Cl.: B64C 25/40, B64C 25/50, B64C 39/02

(54) **ATTERRISSEUR POUR AERONEF**
FAHRWERK FÜR LUFTFAHRZEUG
AIRCRAFT LANDING GEAR

(30) Priorité: 16.06.2015 FR 1555510
(43) Date de publication de la demande: 25.04.2018
(73) Titulaire: Safran Electronics & Defense, 92100 Boulogne-Billancourt (FR); Safran Electrical & Power, 31702 Blagnac Cedex (FR)
(72) Inventeur: ROQUES, Serge, 31702 Blagnac Cedex (FR); GUILLOT, François, 92100 Boulogne-Billancourt (FR)
(74) Mandataire: Regimbeau
(86) Numéro de dépôt international: PCT/EP2016/063843
(87) Numéro de publication internationale: WO 2016/202908

(56) Documents cités:
- EP-A2- 2 783 980
- FR-A1- 2 899 871
- FR-A1- 2 939 099
- US-A1- 2014 225 421

## Description

### DOMAINE DE L'INVENTION

L'invention concerne un atterrisseur pour aéronef.

### ETAT DE LA TECHNIQUE

La plupart des aéronefs sont équipés de trains d'atterrissage ou atterrisseurs permettant à l'aéronef de se déplacer au sol, pendant les phases de décollage, d'atterrissage et de taxiage. Ces atterrisseurs comprennent plusieurs roues pouvant être agencées selon des configurations qui varient d'un aéronef à l'autre.

Certains atterrisseurs peuvent être escamotés à l'intérieur des ailes ou du fuselage de l'aéronef afin de diminuer la résistance à l'air de l'aéronef pendant les phases de vol.

A cet effet, les atterrisseurs sont équipés de systèmes mécaniques à bielles et tringles actionnés par des actionneurs hydrauliques permettant de faire pivoter l'atterrisseur pour le déployer et l'escamoter. Un avantage des actionneurs hydrauliques est qu'ils présentent généralement un poids peu important. Un inconvénient toutefois de ces actionneurs est qu'ils nécessitent une alimentation en fluide hydraulique.

Pour éviter l'utilisation de fluide hydraulique, il serait envisageable de remplacer les actionneurs hydrauliques par des actionneurs électriques. Toutefois, à puissances égales, les actionneurs électriques présentent généralement un poids plus important que les actionneurs hydrauliques.

Par ailleurs, actuellement, lors des phases de taxiage, les aéronefs sont généralement déplacés au sol à l'aide de leurs réacteurs.

Des solutions sont actuellement développées pour déplacer les aéronefs sans utiliser la puissance des réacteurs.

Une solution développée consiste à motoriser certaines des roues des trains principaux des aéronefs en utilisant la puissance électrique produite pas l'unité auxiliaire de puissance (APU). Les moteurs électriques permettant de faire tourner les roues à des vitesses différentes, ce qui permet une plus grande manoeuvrabilité de l'aéronef au sol, en améliorant le braquage de l'avion.

La motorisation des roues permet en outre au pilote de quitter les aires de parkage sans attendre la prise en charge de l'aéronef par un véhicule de remorquage.

Enfin, l'utilisation de la puissance électrique fournie par l'APU améliore significativement les coûts d'exploitation et procure un bénéfice environnemental, en diminuant la consommation de carburant et en limitant le bruit autour des terminaux.

FR 2 939 099 A1 divulgue un atterrisseur comprenant une jambe en deux parties déployables et un mécanisme de transmission configuré pour transmettre un couple généré par un moteur électrique sélectivement à une roue pour entraîner la roue en rotation par rapport à une deuxième partie de jambe. Par US 2014/0225421 A1 un atterrisseur comprenant deux moteurs électriques est connu.

### RESUME DE L'INVENTION

Un but de l'invention est de proposer une solution permettant d'éviter l'utilisation d'actionneurs hydrauliques pour le déploiement et l'escamotage des atterrisseurs.

Ce but est atteint dans le cadre de la présente invention grâce à un atterrisseur pour aéronef comprenant :
- une jambe présentant un axe longitudinal et comprenant une première partie de jambe propre à être articulée sur une structure porteuse de l'aéronef pour le déploiement et l'escamotage de l'atterrisseur, et une deuxième partie de jambe montée mobile en rotation par rapport à la première partie de jambe selon l'axe longitudinal de la jambe,
- une roue montée mobile en rotation par rapport à la deuxième partie de jambe et un moteur électrique propre à entrainer la roue en rotation par rapport à la deuxième partie de jambe,
- un mécanisme de transmission configuré pour transmettre un couple généré par le moteur électrique sélectivement, à la roue pour entrainer la roue en rotation par rapport à la deuxième partie de jambe, ou à la deuxième partie de jambe pour entrainer la deuxième partie de jambe en rotation par rapport à la première partie de jambe selon l'axe longitudinal de la jambe.

Dans un tel atterrisseur, le moteur électrique sert à la fois à l'entrainement ou au freinage de la roue pendant les phases de roulage et à l'orientation de la deuxième partie de jambe. Autrement dit, l'invention tire parti de la présence d'un moteur électrique pour permettre une modification de l'orientation de la deuxième partie de jambe par rapport à la première partie de jambe.

D'une part, la modification de l'orientation de la deuxième partie de jambe par rapport à la première partie de jambe peut permettre une orientation des roues pour diriger l'aéronef au sol pendant les phases de taxiage et de parkage.

D'autre part, la deuxième partie de jambe peut comprendre une portion carénée en forme d'aile. La rotation de la deuxième partie de jambe par rapport à la première partie de jambe autorise ainsi un ajustement de l'orientation de la portion carénée afin de produire une force de portance s'exerçant sur la portion carénée, facilitant l'escamotage de l'atterrisseur.

L'atterrisseur peut en outre présenter les caractéristiques suivantes :
- le mécanisme de transmission comprend un arbre de transmission, présentant une première extrémité propre à être couplée au moteur et une deuxième extrémité propre à être immobilisée par rapport à la première partie de jambe pour entrainer en rotation la deuxième partie de jambe par rapport à la première partie de jambe,
- l'arbre de transmission s'étend à l'intérieur de la jambe,
- l'arbre de transmission est monté rotatif par rapport à la deuxième partie de jambe autour de l'axe longitudinal de la jambe,
- l'atterrisseur comprend en outre un frein agencé entre la première partie de jambe et la deuxième extrémité de l'arbre de transmission, le frein étant mobile entre une configuration engagée dans laquelle le frein empêche une rotation de l'arbre de transmission par rapport à la première partie de jambe, et une configuration désengagée dans laquelle le frein autorise une rotation l'arbre de transmission par rapport à la première partie de jambe,
- l'atterrisseur comprend une roue dentée montée fixe sur la deuxième extrémité de l'arbre de transmission, la roue dentée étant propre à engrener avec une piste circulaire dentée monté fixe sur la structure porteuse de l'aéronef, de sorte qu'une rotation de l'arbre de transmission par rapport à la première partie de jambe entraine une rotation de l'atterrisseur par rapport à la structure porteuse de l'aéronef,
- le mécanisme de transmission comprend un réducteur ayant une entrée, une première sortie et une deuxième sortie, l'entrée étant raccordée au moteur électrique, la première sortie étant raccordée à la roue pour que le moteur puisse entrainer la roue par le biais du réducteur, et la deuxième sortie étant raccordée à l'arbre de transmission pour que le moteur électrique puisse entrainer en rotation l'arbre de transmission par rapport à la deuxième partie de jambe par le biais du réducteur,
- l'atterrisseur comprend en outre un frein agencé entre la première partie de jambe et la deuxième partie de jambe, le frein étant mobile entre une configuration engagée dans laquelle le frein empêche une rotation de la deuxième partie de jambe par rapport à la première partie de jambe, et une configuration désengagée dans laquelle le frein autorise une rotation de la deuxième partie de jambe par rapport à la première partie de jambe,
- l'atterrisseur comprend un frein agencé entre la deuxième partie de jambe et la roue, le frein étant mobile entre une configuration engagée dans laquelle le frein empêche une rotation de la roue par rapport à la deuxième partie de jambe, et une configuration désengagée dans laquelle le frein autorise une rotation de la roue par rapport à la deuxième partie de jambe,
- l'atterrisseur comprend un couple de roues, comprenant une première roue et une deuxième roue, et un couple de moteurs électriques, comprenant un premier moteur électrique et un deuxième moteur électrique propres à entrainer respectivement la première roue et la deuxième roue en rotation par rapport à la deuxième partie de jambe, pour permettre le roulage de l'aéronef,
- le mécanisme de transmission comprend :
   un arbre de transmission, l'arbre de transmission étant monté rotatif par rapport à la deuxième partie de jambe autour de l'axe longitudinal de la jambe, et
   un premier réducteur comprenant une entrée raccordée au premier moteur électrique et une sortie raccordée à l'arbre de transmission, et
   un deuxième réducteur comprenant une entrée raccordée au deuxième moteur électrique et une sortie raccordée à l'arbre de transmission,
   le premier réducteur et le deuxième réducteur formant un différentiel propre à entrainer l'arbre de transmission en rotation lorsque le premier moteur électrique et le deuxième moteur électrique tournent à des vitesses différentes,
- l'atterrisseur comprend un premier frein agencé entre la deuxième partie de jambe et la première roue et un deuxième frein agencé entre la deuxième partie de jambe et la deuxième roue, chaque frein étant mobile entre une configuration engagée dans laquelle le frein empêche une rotation de la roue par rapport à la deuxième partie de jambe et une position désengagée dans laquelle le frein empêche une rotation de la roue par rapport à la deuxième partie de jambe.

### PRESENTATION DES DESSINS

D'autres caractéristiques et avantages ressortiront encore de la description qui suit, laquelle est purement illustrative et non limitative, et doit être lue en regard des figures annexées, parmi lesquelles :
- les figures 1A et 1B représentent de manière schématique un aéronef comprenant des atterrisseurs en position déployée et en position escamotée, respectivement,
- la figure 2 représente de manière schématique le principe d'un atterrisseur conforme à un mode de réalisation de l'invention,
- la figure 3 représente de manière schématique la structure d'un atterrisseur conforme à un mode de réalisation de l'invention.

### DESCRIPTION DETAILLEE D'UN MODE DE REALISATION

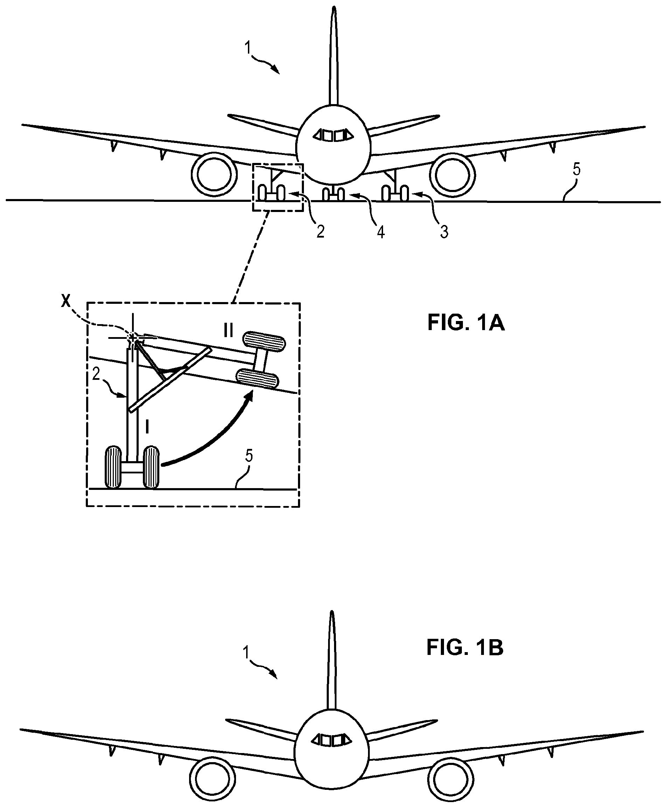

Sur les figures 1A et 1B, l'aéronef 1 représenté comprend deux atterrisseurs principaux 2 et 3 et un atterrisseur avant 4. Les deux atterrisseurs principaux 2 et 3 sont situés sous les ailes de l'aéronef 1. Chaque atterrisseur principal 2, 3 est monté pivotant par rapport à la structure porteuse de l'aéronef 1, autour d'un axe de rotation X sensiblement parallèle à l'axe longitudinal de l'aéronef 1. Chaque atterrisseur 2, 3 est monté pivotant entre une position déployée (position I) et une position escamotée (position II).

En position déployée (figure 1A), chaque atterrisseur 2, 3 s'étend à l'extérieur de l'aile de sorte que les roues de l'atterrisseur peuvent être en contact avec le sol 5 pour permettre l'évolution de l'aéronef 1 lors des phases de décollage, d'atterrissage et de taxiage.

En position escamotée (figure 1B), chaque atterrisseur 2, 3 est rentré à l'intérieur de l'aile pour diminuer la résistance à l'air de l'aéronef 1. Les atterrisseurs 2, 3 sont logés dans des cases à atterrisseur se trouvant dans chaque aile.

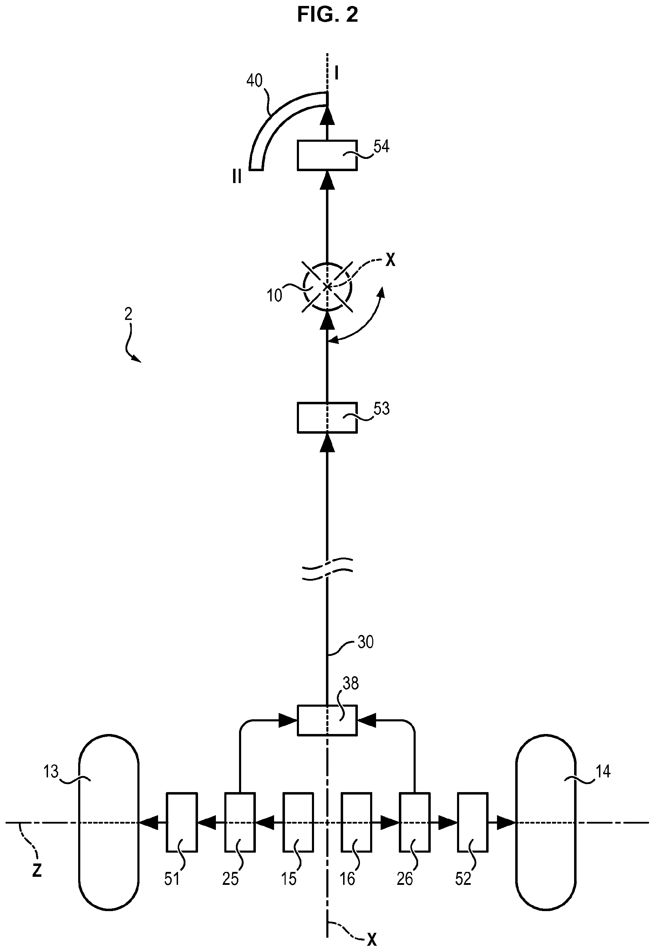

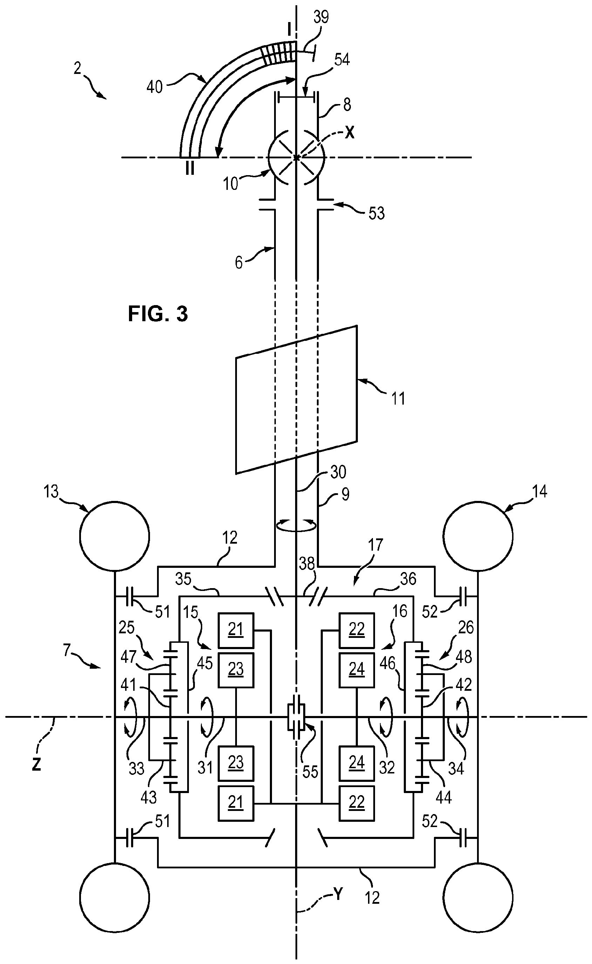

Sur les figures 2 et 3, l'atterrisseur 2 représenté comprend une jambe 6 et un train de roues 7, le train de roue 7 étant relié à la structure porteuse de l'aéronef 1 par le biais de la jambe 6.

La jambe 6 présente un axe longitudinal Y. La jambe 6 comprend une première partie de jambe 8 (ou partie de jambe supérieure) et une deuxième partie de jambe 9 (ou partie de jambe inférieure). La première partie de jambe 8 est monté rotative sur la structure porteuse de l'aéronef autour de l'axe X par le biais d'une articulation 10 pour le déploiement et l'escamotage de l'atterrisseur 2. La deuxième partie de jambe 9 est montée mobile en rotation par rapport à la première partie de jambe 8 selon l'axe longitudinal Y de la jambe 6. De plus, la deuxième partie de jambe 9 comprend une portion carénée 11 en forme d'aile.

Le train de roues 7 comprend un carter 12, une première roue 13 (ou roue droite) et une deuxième roue 14 (ou roue gauche), toutes deux montées à rotation sur le carter 12, autour d'un axe de rotation Z commun.

Le carter 12 du train de roues 7 est monté fixe sur la deuxième partie de jambe 9.

L'atterrisseur 2 comprend en outre un premier moteur électrique 15 pour l'entrainement en rotation de la première roue 13 et un deuxième moteur électrique 16 pour l'entrainement en rotation de la deuxième roue 14. Le premier moteur électrique 15 et le deuxième moteur électrique 16 peuvent être des moteurs synchrones à aimants permanents. Les moteurs électriques 15, 16 présentent de préférence un fort diamètre et une faible épaisseur afin de privilégier le couple généré à la vitesse de rotation.

Le premier moteur électrique 15 comprend un stator 21 monté fixe sur le carter 12 et un rotor 23 propre à être entrainé en rotation par rapport au stator 21 lorsque le premier moteur 15 est alimenté en courant électrique.

De même, le deuxième moteur électrique 16 comprend un stator 22 monté fixe sur le carter 12 et un rotor 24 propre à être entrainé en rotation par rapport au stator 22 lorsque le deuxième moteur 16 est alimenté en courant électrique.

L'atterrisseur 2 comprend en outre un mécanisme de transmission 17 configuré pour transmettre les couples générés par les moteurs électriques 15 et 16 sélectivement aux roues 13 et 14 pour entrainer les roues en rotation, ou à la deuxième partie de jambe 9 pour entrainer la deuxième partie de jambe 9 en rotation par rapport à la première partie de jambe 8.

Le mécanisme de transmission 17 comprend un arbre de transmission 30, un premier réducteur 25 et un deuxième réducteur 26.

Le premier réducteur 25 est disposé entre le premier moteur 15 et la première roue 13. Le premier réducteur 25 comprend un arbre d'entrée 31 raccordé au rotor 23 du premier moteur 15, un premier arbre de sortie 33 raccordé à la première roue 13 et un deuxième arbre de sortie 35 propre à engrener avec l'arbre de transmission 30.

Dans l'exemple illustré sur la figure 3, le premier réducteur 25 est un train épicycloïdal comprenant un planétaire intérieur 41, un porte-satellite 43, un planétaire extérieur 45 (ou couronne) et une pluralité de satellites 47. Le planétaire intérieur 41 est fixé en rotation au rotor 23 du premier moteur 15 par le biais de l'arbre d'entrée 31. Le porte satellite 43 est fixé en rotation à la première roue 13 par le biais du premier arbre de sortie 33 et le planétaire extérieur 45 engrène avec l'arbre de transmission 30 par le biais du deuxième arbre de sortie 35.

De même, le deuxième réducteur 26 est disposé entre le deuxième moteur 16 et la deuxième roue 14. Le deuxième réducteur 26 comprend un arbre d'entrée 32 raccordé au rotor 24 du deuxième moteur 16, un premier arbre de sortie 34 raccordé à la deuxième roue 14 et un deuxième arbre de sortie 36 propre à engrener avec l'arbre de transmission 30.

Dans l'exemple illustré sur la figure 3, le deuxième réducteur 26 est un train épicycloïdal comprenant un planétaire intérieur 42, un porte-satellite 44, un planétaire extérieur 46 (ou couronne) et une pluralité de satellites 48. Le planétaire intérieur 42 est fixé en rotation au rotor 24 du deuxième moteur 16 par le biais de l'arbre d'entrée 32. Le porte satellite 44 est fixé en rotation à la deuxième roue 14 par le biais du premier arbre de sortie 34 et le planétaire extérieur 46 engrène avec l'arbre de transmission 30 par le biais du deuxième arbre de sortie 36.

L'arbre de transmission 30 s'étend à l'intérieur de la jambe 6. Plus précisément, l'arbre de transmission 30 s'étend à l'intérieur de la première partie de jambe 8 et à l'intérieur de la deuxième partie de jambe 9.

L'arbre de transmission 30 comprend une première extrémité 38 propre à engrener avec les arbres de sortie 35 et 36 des réducteurs 25 et 26, et une deuxième extrémité 39 propre à engrener la structure porteuse de l'aéronef.

La première extrémité 38 de l'arbre de transmission 30 comprend un pignon conique denté engrenant avec des dentures coniques respectives des arbres de sortie 35 et 36.

La deuxième extrémité 39 comprend une roue dentée propre à engrener avec une piste circulaire dentée 40 fixée sur la structure porteuse de l'aéronef.

Par ailleurs, l'atterrisseur 2 comprend un premier frein 51 agencé entre le carter 12 et la première roue 13. Le premier frein 51 est mobile entre une configuration engagée dans laquelle le frein 51 empêche une rotation de la première roue 13 par rapport au carter 12 (et donc à la deuxième partie de jambe 9), et une configuration désengagée dans laquelle le frein 51 autorise une rotation de la première roue 13 par rapport au carter 12 (et donc à la deuxième partie de jambe 9).

De même, l'atterrisseur comprend un deuxième frein 52 agencé entre le carter 12 et la deuxième roue 14. Le deuxième frein 52 est mobile entre une configuration engagée dans laquelle le frein 52 empêche une rotation de la deuxième roue 14 par rapport au carter 12 (et donc à la deuxième partie de jambe 9), et une configuration désengagée dans laquelle le frein 52 autorise une rotation de la deuxième roue 14 par rapport au carter 12 (et donc à la deuxième partie de jambe 9).

Le premier frein 51 et le deuxième frein 52 sont par exemple des freins multidisques à actionnement électrique.

L'atterrisseur 2 comprend en outre un troisième frein 53 agencé entre la première partie de jambe 8 et la deuxième partie de jambe 9. Le troisième frein 53 est mobile entre une configuration engagée dans laquelle le troisième frein 53 empêche une rotation de la deuxième partie de jambe 9 par rapport à la première partie de jambe 8, et une configuration désengagée dans laquelle le troisième frein 53 autorise une rotation de la deuxième partie de jambe 9 par rapport à la première partie de jambe 8.

Enfin, l'atterrisseur 2 comprend un quatrième frein 54 agencé entre la première partie de jambe 8 et la deuxième extrémité 39 de l'arbre d'entrainement. Le quatrième frein 54 est mobile entre une configuration engagée dans laquelle le quatrième frein 54 empêche une rotation de l'arbre de transmission 30 par rapport à la première partie de jambe 9, et une configuration désengagée dans laquelle le quatrième frein 54 autorise une rotation l'arbre de transmission 30 par rapport à la première partie de jambe 8.

Le troisième frein 53 et le quatrième frein 54 sont par exemple des freins à crabot, permettant de transmettre des couples importants tout en présentant un encombrement réduit.

Enfin, l'atterrisseur 2 comprend un cinquième frein 55 agencé entre les rotors 23 et 24 des moteurs 15 et 16. Le cinquième frein 55 est mobile entre une configuration engagée dans laquelle les rotors 23 et 24 sont fixes l'un par rapport à l'autre, et une configuration désengagée dans laquelle le cinquième frein 55 autorise une rotation indépendante des rotors 23 et 24 des moteurs 15 et 16.

En fonctionnement normal, le cinquième frein 55 est en configuration désengagée, autorisant une rotation indépendante des rotors 23 et 24 des moteurs 15 et 16.

En cas de panne de l'un des moteurs 15 ou 16, le frein 55 peut être engagé de manière à solidariser les rotors 23 et 24 des moteurs 15 et 16, assurant ainsi une rotation des roues 13 et 14 à la même vitesse.

En fonctionnement normal, l'atterrisseur 2 peut être piloté selon trois modes principaux :

### Premier mode : roulage et freinage au sol

Selon un premier mode de fonctionnement, l'atterrisseur 2 est en position déployée (position I), le troisième frein 53 et le quatrième frein 54 sont en configuration engagée.

Dans ce mode de fonctionnement, l'arbre de transmission 30 est bloqué par rapport à la première partie de jambe 8 par le quatrième frein 54.

De plus, la deuxième partie de jambe 9 est également bloquée par rapport à la première partie de jambe 8 par le troisième frein 53.

Le premier moteur électrique 15 et le deuxième moteur électrique 16 sont activés pour entrainer la première roue 13 et la deuxième roue 14 en rotation par le biais du premier réducteur 25 et du deuxième réducteur 26.

Ce premier mode de fonctionnement est utilisé pendant les phases de roulage et de freinage au sol. Les moteurs électriques 15 et 16 peuvent être pilotés à des vitesses différentes afin de permettre à l'aéronef 1 de tourner.

En cas de besoin, le ralentissement de l'aéronef 1 est assuré par engagement du premier frein 51 et du deuxième frein 52. Dans le cas où les moteurs électriques 15 et 16 sont réversibles, il est également possible d'assurer le ralentissement de l'aéronef par récupération de l'énergie par les moteurs électriques 15 et 16.

### Deuxième mode : déploiement et escamotage de l'atterrisseur

Selon un deuxième mode de fonctionnement, le premier frein 51, le deuxième frein 52 et le troisième frein 53 sont en configuration engagée. Le quatrième frein 54 est en configuration désengagée.

Dans ce mode de fonctionnement, les roues 13 et 14 sont bloquées par rapport à la deuxième partie de jambe 9. De plus, la deuxième partie de jambe 9 est bloquée par rapport à la première partie de jambe 8.

Le premier moteur électrique 15 et le deuxième moteur électrique 16 sont activés en sens inverses. C'est-à-dire que le rotor 23 du premier moteur 15 est entrainé en rotation par rapport au stator 21 selon un premier sens de rotation, et le rotor 24 du deuxième moteur 16 est entrainé en rotation par rapport au stator 22 selon un deuxième sens de rotation, opposé au premier sens.

Le premier moteur électrique 15 et le deuxième moteur électrique 16 entrainent en rotation les deux arbres 35 et 36 en sens opposés par l'intermédiaire des réducteurs 25 et 26.

Les deux arbres 35 et 36 étant entrainés en rotation en sens opposés, cela a pour effet d'entrainer l'arbre de transmission 30 en rotation par rapport à la première partie de jambe 8.

Les arbres de sortie 35, 36 et l'arbre de transmission 30 forment en effet un différentiel propre à entrainer l'arbre de transmission 30 en rotation par rapport à la jambe 6 lorsque le premier moteur électrique et le deuxième moteur électrique tournent à des vitesses différentes

La rotation de de l'arbre de transmission 30 a pour effet de faire rouler l'extrémité 39 de l'arbre de transmission 30 sur la piste circulaire dentée 40. Du fait de l'engrènement de l'arbre de transmission 30 avec la piste circulaire dentée, l'atterrisseur 1 est entrainé en rotation par rapport à la structure de l'aéronef autour de l'axe X par le biais de l'articulation 10.

L'atterrisseur 2 est entrainé en rotation par rapport à la structure de l'aéronef entre la position déployée (position I) et la position escamotée (position II). Le sens de rotation de l'atterrisseur 2 dépend des sens de rotation des moteurs électriques 15 et 16.

L'atterrisseur 2 peut être sélectivement déployé ou escamoté en inversant le sens de rotation des moteurs électriques 15 et 16.

### Troisième mode : orientation de l'atterrisseur

Selon un troisième mode de fonctionnement, le premier frein 51, le deuxième frein 52 et le quatrième frein 54 sont en configuration engagée. Le troisième frein 53 est en configuration désengagée.

Dans ce mode de fonctionnement, les roues 13 et 14 sont bloquées par rapport à la deuxième partie de jambe 9. De plus, l'arbre de transmission 30 est bloqué par rapport à la première partie de jambe 8 par le quatrième frein 54.

Le premier moteur électrique 15 et le deuxième moteur électrique 16 sont activés en sens inverses. C'est-à-dire que le rotor 23 du premier moteur 15 est entrainé en rotation par rapport au stator 21 selon un premier sens de rotation, et le rotor 24 du deuxième moteur 16 est entrainé en rotation par rapport au stator 22 selon un deuxième sens de rotation, opposé au premier sens.

Le premier moteur électrique 15 et le deuxième moteur électrique 16 entrainent en rotation les deux arbres 35 et 36 en sens opposés par l'intermédiaire des réducteurs 25 et 26.

L'arbre de transmission 30 étant bloqué en rotation par rapport à la première partie de jambe 8, cela a pour effet que la deuxième partie de jambe 9 et le train de roue 7 sont entrainés en rotation par rapport à la première partie de jambe 8 autour de l'axe Y.

La rotation de la deuxième partie de jambe 9 par rapport à la première partie de jambe 8 permet un ajustement de l'orientation de la portion carénée 11 afin de produire une force de portance s'exerçant sur la portion carénée 11.

La portion carénée 11 peut être orientée de manière à faciliter l'escamotage de l'atterrisseur 2.

La position angulaire de la portion carénée est ajustée de manière à produire une force de portance favorable à la remontée de l'atterrisseur 2. Une fois la position angulaire atteinte, le troisième frein 53 est engagé et le quatrième frein 54 est désengagé pour permettre un escamotage de l'atterrisseur 2 (deuxième mode de fonctionnement).

Ce mode de fonctionnement peut également être utilisé pour diriger l'aéronef 1 au sol pendant les phases de taxiage et de parkage.

## Revendications

1. Atterrisseur (2) pour aéronef comprenant :
- une jambe (6) présentant un axe longitudinal (Y) et comprenant une première partie de jambe (8) propre à être articulée sur une structure porteuse de l'aéronef (1) pour le déploiement et l'escamotage de l'atterrisseur (2), et une deuxième partie de jambe (9) montée mobile en rotation par rapport à la première partie de jambe (8) selon l'axe longitudinal (Y) de la jambe (6),
- une roue (13, 14) montée mobile en rotation par rapport à la deuxième partie de jambe (9) et un moteur électrique (15, 16) propre à entrainer la roue (13, 14) en rotation par rapport à la deuxième partie de jambe (9),
- un mécanisme de transmission (17) configuré pour transmettre un couple généré par le moteur électrique (15, 16) sélectivement, à la roue (13, 14) pour entrainer la roue en rotation par rapport à la deuxième partie de jambe (9), ou à la deuxième partie de jambe (9) pour entrainer la deuxième partie de jambe (9) en rotation par rapport à la première partie de jambe (8) selon l'axe longitudinal (Y) de la jambe (6).

2. Atterrisseur selon la revendication 1, dans lequel le mécanisme de transmission (17) comprend un arbre de transmission (30), présentant une première extrémité (38) propre à être couplée au moteur (15, 16) et une deuxième extrémité (39) propre à être immobilisée par rapport à la première partie de jambe (8) pour entrainer en rotation la deuxième partie de jambe (9) par rapport à la première partie de jambe (8).

3. Atterrisseur selon la revendication 2, dans lequel l'arbre de transmission (30) s'étend à l'intérieur de la jambe (6).

4. Atterrisseur selon l'une des revendications 2 et 3, dans lequel l'arbre de transmission (30) est monté rotatif par rapport à la deuxième partie de jambe (9) autour de l'axe longitudinal (Y) de la jambe (6).

5. Atterrisseur selon l'une des revendications 2 à 4, comprenant en outre un frein (54) agencé entre la première partie de jambe (8) et la deuxième extrémité (39) de l'arbre de transmission (30), le frein (54) étant mobile entre une configuration engagée dans laquelle le frein (54) empêche une rotation de l'arbre de transmission (30) par rapport à la première partie de jambe (8), et une configuration désengagée dans laquelle le frein (54) autorise une rotation l'arbre de transmission (30) par rapport à la première partie de jambe (8).

6. Atterrisseur selon l'une des revendications 2 à 5, comprenant une roue dentée montée fixe sur la deuxième extrémité (39) de l'arbre de transmission (30), la roue dentée étant propre à engrener avec une piste circulaire dentée (40) monté fixe sur la structure porteuse de l'aéronef (1), de sorte qu'une rotation de l'arbre de transmission (30) par rapport à la première partie de jambe (8) entraine une rotation de l'atterrisseur (2) par rapport à la structure porteuse de l'aéronef (1).

7. Atterrisseur selon l'une des revendications 2 à 6, dans lequel le mécanisme de transmission (17) comprend un réducteur (25, 26) ayant une entrée (31, 32), une première sortie (33, 34) et une deuxième sortie (35, 36), l'entrée (31, 32) étant raccordée au moteur électrique (15, 16), la première sortie (33, 34) étant raccordée à la roue (13, 14) pour que le moteur puisse entrainer la roue par le biais du réducteur (25, 26), et la deuxième sortie (35, 36) étant raccordée à l'arbre de transmission (30) pour que le moteur électrique (15, 16) puisse entrainer en rotation l'arbre de transmission (30) par rapport à la deuxième partie de jambe (9) par le biais du réducteur (25, 26).

8. Atterrisseur selon l'une des revendications 1 à 7, comprenant en outre un frein (53) agencé entre la première partie de jambe (8) et la deuxième partie de jambe (9), le frein (53) étant mobile entre une configuration engagée dans laquelle le frein (53) empêche une rotation de la deuxième partie de jambe (9) par rapport à la première partie de jambe (9), et une configuration désengagée dans laquelle le frein (53) autorise une rotation de la deuxième partie de jambe (9) par rapport à la première partie de jambe (8).

9. Atterrisseur selon l'une des revendications 1 à 8, dans lequel la deuxième partie de jambe (9) comprend une portion carénée (11) en forme d'aile, la rotation de la deuxième partie de jambe (9) par rapport à la première partie de jambe (8) autorisant un ajustement de l'orientation de la portion carénée (11) afin de produire une force de portance s'exerçant sur la portion carénée (11), facilitant l'escamotage de l'atterrisseur (2).

10. Atterrisseur selon l'une des revendications 1 à 9, comprenant un frein (51, 52) agencé entre la deuxième partie de jambe (9) et la roue (13, 14), le frein (51, 52) étant mobile entre une configuration engagée dans laquelle le frein (51, 52) empêche une rotation de la roue (13, 14) par rapport à la deuxième partie de jambe (9), et une configuration désengagée dans laquelle le frein (51, 52) autorise une rotation de la roue (13, 14) par rapport à la deuxième partie de jambe (9).

11. Atterrisseur selon la revendication 1, comprenant un couple de roues (13, 14), comprenant une première roue (13) et une deuxième roue (14), et un couple de moteurs électriques (15, 16), comprenant un premier moteur électrique (15) et un deuxième moteur électrique (16) propres à entrainer respectivement la première roue (13) et la deuxième roue (14) en rotation par rapport à la deuxième partie de jambe (9), pour permettre le roulage de l'aéronef (1).

12. Atterrisseur selon la revendication 11, dans lequel le mécanisme de transmission (17) comprend :
- un arbre de transmission (30), l'arbre de transmission (30) étant monté rotatif par rapport à la deuxième partie de jambe (9) autour de l'axe longitudinal (Y) de la jambe (6), et
- un premier réducteur (25) comprenant une entrée (31) raccordée au premier moteur électrique (15) et une sortie (35) raccordée à l'arbre de transmission (30), et
- un deuxième réducteur (26) comprenant une entrée (32) raccordée au deuxième moteur électrique (16) et une sortie (36) raccordée à l'arbre de transmission (30),
le premier réducteur (25) et le deuxième réducteur (26) formant un différentiel propre à entrainer l'arbre de transmission (30) en rotation lorsque le premier moteur électrique (15) et le deuxième moteur électrique (16) tournent à des vitesses différentes.

13. Atterrisseur selon la revendication 12, comprenant un premier frein (51) agencé entre la deuxième partie de jambe (9) et la première roue (13) et un deuxième frein (52) agencé entre la deuxième partie de jambe (9) et la deuxième roue (14), chaque frein (51, 52) étant mobile entre une configuration engagée dans laquelle le frein (51, 52) empêche une rotation de la roue (13, 14) par rapport à la deuxième partie de jambe (9) et une position désengagée dans laquelle le frein (51, 52) empêche une rotation de la roue (13, 14) par rapport à la deuxième partie de jambe (9).

## Patentansprüche

1. Ein Fahrwerk (2) für ein Luftflugzeug, umfassend:
- ein Bein (6), das eine Längsachse (Y) aufweist und einen ersten Beinteil (8) umfasst, der geeignet ist, auf einer Tragstruktur des Luftfahrzeugs (1) für das Ausfahren und das Einfahren des Fahrwerks (2) gelenkig gelagert zu sein, und einen zweiten Beinteil (9), der in Bezug auf den ersten Beinteil (8) entlang der Längsachse (Y) des Beines (6) drehbeweglich gelagert ist,
- ein Rad (13, 14), das in Bezug auf den zweiten Beinteil (9) drehbeweglich gelagert ist, und einen Elektromotor (15, 16), der geeignet ist, das Rad (13, 14) in Bezug auf den zweiten Beinteil (9) drehbar anzutreiben,
- einen Übertragungsmechanismus (17), der ausgestaltet ist, um ein durch den Elektromotor (15, 16) erzeugtes Drehmoment selektiv auf das Rad (13, 14), um das Rad in Bezug auf den zweiten Beinteil (9) drehbar anzutreiben, oder auf den zweiten Beinteil (9) zu übertragen, um den zweiten Beinteil (9) in Bezug auf den ersten Beinteil (8) entlang der Längsachse (Y) des Beines (6) drehbar anzutreiben.

2. Fahrwerk nach Anspruch 1, wobei der Übertragungsmechanismus (17) eine Übertragungswelle (30) umfasst, die ein erstes Ende (38), das geeignet ist, an den Motor (15, 16) gekoppelt zu sein, und ein zweites Ende (39) aufweist, das geeignet ist, in Bezug auf den ersten Beinteil (8) blockiert zu sein, um den zweiten Beinteil (9) in Bezug auf den ersten Beinteil (8) drehbar anzutreiben.

3. Fahrwerk nach Anspruch 2, wobei die Übertragungswelle (30) sich im Inneren des Beines (6) erstreckt.

4. Fahrwerk nach einem der Ansprüche 2 und 3, wobei die Übertragungswelle (30) in Bezug auf den zweiten Beinteil (9) um die Längsachse (Y) des Beines (6) drehbar gelagert ist.

5. Fahrwerk nach einem der Ansprüche 2 bis 4, das ferner eine Bremse (54) umfasst, die zwischen dem ersten Beinteil (8) und dem zweiten Ende (39) der Übertragungswelle (30) angeordnet ist, wobei die Bremse (54) zwischen einer Eingriffsausgestaltung, in der die Bremse (54) eine Drehung der Übertragungswelle (39) in Bezug auf den ersten Beinteil (8) verhindert, und einer Außereingriffsausgestaltung beweglich ist, in der die Bremse (54) eine Drehung der Übertragungswelle (30) in Bezug auf den ersten Beinteil (8) zulässt.

6. Fahrwerk nach einem der Ansprüche 2 bis 5, das ein Zahnrad umfasst, das fest an dem zweiten Ende (39) der Übertragungswelle (30) montiert ist, wobei das Zahnrad geeignet ist, mit einer kreisförmigen Zahnbahn (40) ineinanderzugreifen, die fest an der Tragstruktur des Luftfahrzeugs (1) montiert ist, derart, dass eine Drehung der Übertragungswelle (30) in Bezug auf den ersten Beinteil (8) eine Drehung des Fahrwerks (2) in Bezug auf die Tragstruktur des Luftfahrzeugs (1) bewirkt.

7. Fahrwerk nach einem der Ansprüche 2 bis 6, wobei der Übertragungsmechanismus (17) ein Reduktionsgetriebe (25, 26) umfasst, das einen Eingang (31, 32), einen ersten Ausgang (33, 34) und einen zweiten Ausgang (35, 36) umfasst, wobei der Eingang (31, 32) an den Elektromotor (15, 16) angeschlossen ist, wobei der erste Ausgang (33, 34) an das Rad (13, 14) angeschlossen ist, damit der Motor das Rad über das Reduktionsgetriebe (25, 26) antreiben kann, und wobei der zweite Ausgang (35, 36) an die Übertragungswelle (30) angeschlossen ist, damit der Elektromotor (15, 16) die Übertragungswelle (30) in Bezug auf den zweiten Beinteil (9) über das Reduktionsgetriebe (25, 26) drehbar antreiben kann.

8. Fahrwerk nach einem der Ansprüche 1 bis 7, das ferner eine Bremse (53) umfasst, die zwischen dem ersten Beinteil (8) und dem zweiten Beinteil (9) angeordnet ist, wobei die Bremse (53) zwischen einer Eingriffsausgestaltung, in der die Bremse (53) eine Drehung des zweiten Beinteils (9) in Bezug auf den ersten Beinteil (9) verhindert, und einer Außereingriffsausgestaltung beweglich ist, in der die Bremse (53) eine Drehung des zweiten Beinteils (9) in Bezug auf das erste Beinteil (8) zulässt.

9. Fahrwerk nach einem der Ansprüche 1 bis 8, wobei der zweite Beinteil (9) einen stromlinienförmigen Abschnitt (11) mit Flügelform umfasst, wobei die Drehung des zweiten Beinteils (9) in Bezug auf den ersten Beinteil (8) eine Anpassung der Ausrichtung des stromlinienförmigen Abschnitts (11) zulässt, um eine Auftriebskraft zu erzeugen, die auf den stromlinienförmigen Abschnitt (11) ausgeübt wird, wodurch das Einfahren des Fahrwerks (2) erleichtert wird.

10. Fahrwerk nach einem der Ansprüche 1 bis 9, das eine Bremse (51, 52) umfasst, die zwischen dem zweiten Beinteil (9) und dem Rad (13, 14) angeordnet ist, wobei die Bremse (51, 52) zwischen einer Eingriffsausgestaltung, in der die Bremse (51, 52) eine Drehung des Rades (13, 14) in Bezug auf das zweite Beinteil (9) verhindert, und einer Außereingriffsausgestaltung beweglich ist, in der die Bremse (51, 52) eine Drehung des Rades (13, 14) in Bezug auf den zweiten Beinteil (9) zulässt.

11. Fahrwerk nach Anspruch 1, das ein Paar von Rädern (13, 14), das ein erstes Rad (13) und ein zweites Rad (14) umfasst, und ein Paar von Elektromotoren (15, 16) umfasst, das einen ersten Elektromotor (15) und einen zweiten Elektromotor (16) umfasst, die geeignet sind, das erste Rad (13) beziehungsweise das zweite Rad (14) in Bezug auf den zweiten Beinteil (9) drehbar anzutreiben, um das Rollen des Luftfahrzeugs (1) zu ermöglichen.

12. Fahrwerk nach Anspruch 11, wobei der Übertragungsmechanismus (17) Folgendes umfasst:
- eine Übertragungswelle (30), wobei die Übertragungswelle (30) in Bezug auf den zweiten Beinteil (9) um die Längsachse (Y) des Beines (6) drehbar gelagert ist, und
- ein erstes Reduktionsgetriebe (25), das einen Eingang (31), der an den ersten Elektromotor (15) angeschlossen ist, und einen Ausgang (35) umfasst, der an die Übertragungswelle (30) angeschlossen ist, und
- ein zweites Reduktionsgetriebe (26), das einen Eingang (32), der an den zweiten Elektromotor (16) angeschlossen ist, und einen Ausgang (36) umfasst, der an die Übertragungswelle (30) angeschlossen ist,
wobei das erste Reduktionsgetriebe (25) und das zweite Reduktionsgetriebe (26) ein Differentialgetriebe (30) bilden, das geeignet ist, die Übertragungswelle (30) drehbar anzutreiben, wenn der erste Elektromotor (15) und der zweite Elektromotor (16) sich mit unterschiedlichen Drehzahlen drehen.

13. Fahrwerk nach Anspruch 12, das eine erste Bremse (51), die zwischen dem zweiten Beinteil (9) und dem ersten Rad (13) angeordnet ist, und eine zweite Bremse (52) umfasst, die zwischen dem zweiten Beinteil (9) und dem zweiten Rad (14) angeordnet ist, wobei jede Bremse (51, 52) zwischen einer Eingriffsausgestaltung, in der die Bremse (51, 52) eine Drehung des Rades (13, 14) in Bezug auf den zweiten Beinteil (9) verhindert, und einer Außereingriffsausgestaltung beweglich ist, in der die Bremse (51, 52) eine Drehung des Rades (13, 14) in Bezug auf das zweite Beinteil (9) verhindert.

## Claims

1. A landing gear (2) for an aircraft comprising:
- a leg (6) having a longitudinal axis (Y) and comprising a first leg part (8) suitable for being articulated on a support structure of the aircraft (1) for deployment and retraction of the landing gear (2), and a second leg part (9) rotatably mounted relative to the first leg part (8) along the longitudinal axis (Y) of the leg (6),
- a wheel (13, 14) rotatably mounted relative to the second leg part (9) and an electric motor (15, 16) suitable for driving the wheel (13, 14) in rotation relative to the second leg part (9),
- a transmission mechanism (17) configured to transmit torque generated by the electric motor (15, 16) selectively to the wheel (13, 14) to drive the wheel in rotation relative to the second leg part (9), or to the second leg part (9) to drive the second leg part (9) in rotation relative to the first leg part (8) along the longitudinal axis (Y) of the leg (6).

2. The landing gear according to claim 1, wherein the transmission mechanism (17) comprises a transmission shaft (30), having a first end (38) suitable for being coupled to the motor (15, 16) and a second end (39) suitable for being immobilized relative to the first leg part (8) to drive the second leg part in rotation (9) relative to the first leg part (8).

3. The landing gear according to claim 2, wherein the transmission shaft (30) extends inside the leg (6).

4. The landing gear according to one of claims 2 and 3, wherein the transmission shaft (30) is rotatably mounted relative to the second leg part (9) about the longitudinal axis (Y) of the leg (6).

5. The landing gear according to one of claims 2 to 4, further comprising a brake (54) arranged between the first leg part (8) and the second end (39) of the transmission shaft (30), the brake (54) being movable between an engaged configuration in which the brake (54) prevents rotation of the transmission shaft (30) relative to the first leg part (8), and a disengaged configuration in which the brake (54) enables rotation of the transmission shaft (30) relative to the first leg part (8).

6. The landing gear according to one of claims 2 to 5, comprising a toothed wheel fixedly mounted on the second end (39) of the transmission shaft (30), the toothed wheel being suitable for meshing with a toothed circular track (40) fixedly mounted on the support structure of the aircraft (1), such that rotation of the transmission shaft (30) relative to the first leg part (8) causes rotation of the landing gear (2) relative to the bearing structure of the aircraft (1).

7. The landing gear according to one of claims 2 to 6, wherein the transmission mechanism (17) comprises a reduction gear (25, 26) having an input (31, 32), a first output (33, 34) and a second output (35, 36), the input (31, 32) being connected to the electric motor (15, 16), the first output (33, 34) being connected to the wheel (13, 14) so that the motor may drive the wheel by means of the reduction gear (25, 26), and the second output (35, 36) being connected to the transmission shaft (30) so that the electric motor (15, 16) may drive the transmission shaft (30) in rotation relative to the second leg part (9) by means of the reduction gear (25, 26) .

8. The landing gear according to one of claims 1 to 7, further comprising a brake (53) arranged between the first leg part (8) and the second leg part (9), the brake (53) being movable between an engaged configuration in which the brake (53) prevents rotation of the second leg part (9) relative to the first leg part (9), and a disengaged configuration in which the brake (53) enables rotation of the second leg part (9) relative to the first leg part (8).

9. The landing gear according to one of claims 1 to 8, wherein the second leg part (9) comprises a wing-shaped faired portion (11), the rotation of the second leg part (9) relative to the first leg part (8) enabling adjustment of the orientation of the faired portion (11) to produce a lift force acting on the faired portion (11), for facilitating retraction of the landing gear (2) .

10. The landing gear according to one of claims 1 to 9, comprising a brake (51, 52) arranged between the second leg part (9) and the wheel (13. 14), the brake (51, 52) being movable between an engaged configuration in which the brake (51, 52) prevents rotation of the wheel (13, 14) relative to the second leg part (9), and a disengaged configuration in which the brake (51, 52) enables rotation of the wheel (13, 14) relative to the second leg part (9).

11. The landing gear according to claim 1, comprising a couple of wheels (13, 14), comprising a first wheel (13) and a second wheel (14), and a couple of electric motors (15, 16), comprising a first electric motor (15) and a second electric motor (16) suitable for driving respectively the first wheel (13) and the second wheel (14) in rotation relative to the second leg part (9), to enable rolling of the aircraft (1).

12. The landing gear according to claim 11, wherein the transmission mechanism (17) comprises:
- a transmission shaft (30), the transmission shaft (30) being rotatably mounted relative to the second leg part (9) about the longitudinal axis (Y) of the leg (6), and
- a first reduction gear (25) comprising an input (31) connected to the first electric motor (15) and an output (35) connected to the transmission shaft (30), and
- a second reduction gear (26) comprising an input (32) connected to the second electric motor (16) and an output (36) connected to the transmission shaft (30),
the first reduction gear (25) and the second reduction gear (26) forming a differential suitable for driving the transmission shaft (30) in rotation when the first electric motor (15) and the second electric motor (16) turn at different speeds.

13. The landing gear according to claim 12, comprising a first brake (51) arranged between the second leg part (9) and the first wheel (13) and a second brake (52) arranged between the second leg part (9) and the second wheel (14), each brake (51, 52) being movable between an engaged configuration in which the brake (51, 52) prevents rotation of the wheel (13, 14) relative to the second leg part (9) and a disengaged position in which the brake (51, 52) prevents rotation of the wheel (13, 14) relative to the second leg part (9).
